# EUROPEAN PATENT APPLICATION

(11) **EP 4 398 408 A1**
(43) Date of publication of application: **10.07.2024**
(21) Application number: 22864042.1
(22) Date of filing: 30.06.2022
(51) Int. Cl.: H01M 50/538, H01M 50/536

(54) **BATTERY AND BONDING METHOD**

(30) Priority: 30.08.2021 JP 2021139952
(71) Applicant: Panasonic Holdings Corporation, Osaka 571-8501 (JP); Panasonic Energy Co., Ltd., Osaka 570-8511 (JP)
(72) Inventor: SHINOBU, Tomoaki, Kadoma-shi, Osaka 571-0057 (JP); MATSUMURA, Suguru, Kadoma-shi, Osaka 571-0057 (JP); UEGAKI, Shunsuke, Kadoma-shi, Osaka 571-0057 (JP); HIROSE, Takayuki, Kadoma-shi, Osaka 571-0057 (JP)
(74) Representative: Novagraaf International SA
(86) International application number: PCT/JP2022/026388
(87) International publication number: WO 2023/032454

(57) **Abstract**

This battery is provided with: a wound electrode group 2 wherein a separator and electrode plates are stacked and wound; and a collector plate. The electrode group 2 has a bonding region in which end parts of a plurality of electrode plates that are arranged in a radial direction B are bend in the radial direction B, and the plurality of bent end parts are bonded to the collector plate. The bonding region is sandwiched between two non-bonding regions 50 that are arranged in the circumferential direction of the electrode group 2; and a first boundary part 52, which is the boundary between the bonding region and one non-bonding region 50, and a second boundary part 54, which is the boundary between the bonding region and the other non-bonding region 50, extend substantially parallel to a specific virtual line L that passes through the winding center C of the electrode group 2 and the bonding region.

## Description

### TECHNICAL FIELD

The present disclosure relates to a battery including an electrode group and a current collector plate and a method of joining an electrode group and a current collector plate.

### BACKGROUND ART

Conventionally, a battery in which a winding electrode group and an electrolytic solution are housed in a cylindrical outer can is known. In connection with such a battery, PATENT LITERATURE 1 discloses a method of bending the end of the electrode group to form a flat welding surface and welding the welding surface and the current collector plate.

### RELATED-ART LITERATURE

### PATENT LITERATURE

PATENT LITERATURE 1: JP2015-106613

### SUMMARY OF INVENTION

### TECHNICAL PROBLEM

We have found a technology for improving the quality of a battery in a method of joining a current collector plate to a welding surface formed by bending the end of the electrode group.

The present disclosure addresses the issue described above, and a purpose thereof is to provide a technology for improving the quality of batteries.

### SOLUTION TO PROBLEM

An embodiment of the present disclosure relates to a battery. The battery includes: a winding electrode group formed by stacking and winding a separator and an electrode plate; and a current collector plate. The electrode group has a joined region in which ends of a plurality of electrode plates arranged in a radial direction are bent in the radial direction and a plurality of bent ends are joined to the current collector plate. The joined region is sandwiched by two non-joined regions arranged in a circumferential direction of the electrode group, and a first boundary portion, which is a boundary between the joined region and one of the non-joined regions, and a second boundary portion, which is a boundary between the joined region and the other non-joined region, extend substantially parallel to a predetermined imaginary line passing through a center of winding of the electrode group and the joined region.

Another embodiment of the present disclosure relates to a method of joining a winding electrode group formed by stacking and winding a separator and an electrode plate with a current collector plate. The method of joining includes: pressing a first processing tool against ends of a plurality of electrode plates arranged in a radial direction of the electrode group to form a first ridge line substantially parallel to an imaginary line passing through a center of winding of the electrode group and displaced in a circumferential direction of the electrode group with respect to the imaginary line; pressing, concurrently or after formation of the first ridge line, a second processing tool against the ends of the plurality of electrode plates arranged in the radial direction to form a second ridge line substantially parallel to the imaginary line and displaced in the circumferential direction with respect to the first ridge line; pressing a third processing tool against a section sandwiched between the first ridge line and the second ridge line to form a joined region by bending the ends of the plurality of electrode plates in the section in the radial direction; and joining the ends of the plurality of electrode plates bent in the joined region with the current collector plate.

Optional combinations of the aforementioned constituting elements, and implementations of the disclosure in the form of methods, apparatuses, and systems may also be practiced as additional aspects of the present disclosure.

### ADVANTAGEOUS EFFECTS OF INVENTION

According to the present disclosure, the quality of batteries can be improved.

### BRIEF DESCRIPTION OF DRAWINGS

FIG. 1 is a cross-sectional view of a battery.
FIG. 2A is an exploded perspective view of an electrode group.
FIG. 2B is a plan view of the electrode group to which the first current collector plate is joined.
FIG. 3A is a plan view of the electrode group.
FIG. 3B is an enlarged view of a set comprised of the first joined region and the non-joined regions.
FIGS. 4A, 4B and 4C show the steps of forming the first joined region.
FIG. 5A shows the section photographed when the spacing M is 0.25D.
FIG. 5B shows the first joined region photographed when the spacing M is 0.25D.
FIG. 5C shows the section photographed when the spacing M is 0.1D.
FIG. 5D shows the first joined region photographed when the spacing M is 0.1D.

### DESCRIPTION OF EMBODIMENTS

Hereinafter, the present disclosure will be described based on preferred embodiments with reference to drawings. The embodiments do not limit the scope of the present disclosure but exemplify the disclosure. Not all of the features and the combinations thereof described in the embodiments are necessarily essential to the present disclosure. Identical or like constituting elements, members, processes shown in the drawings are represented by identical symbols and a duplicate description will be omitted as appropriate. The scales and shapes shown in the figures are defined for convenience's sake to make the explanation easy and shall not be interpreted limitatively unless otherwise specified. Terms like "first", "second", etc. used in the specification and claims do not indicate an order or importance by any means unless otherwise specified and are used to distinguish a certain feature from the others. Those of the members that are not material to the description of the embodiments are omitted in the drawings.

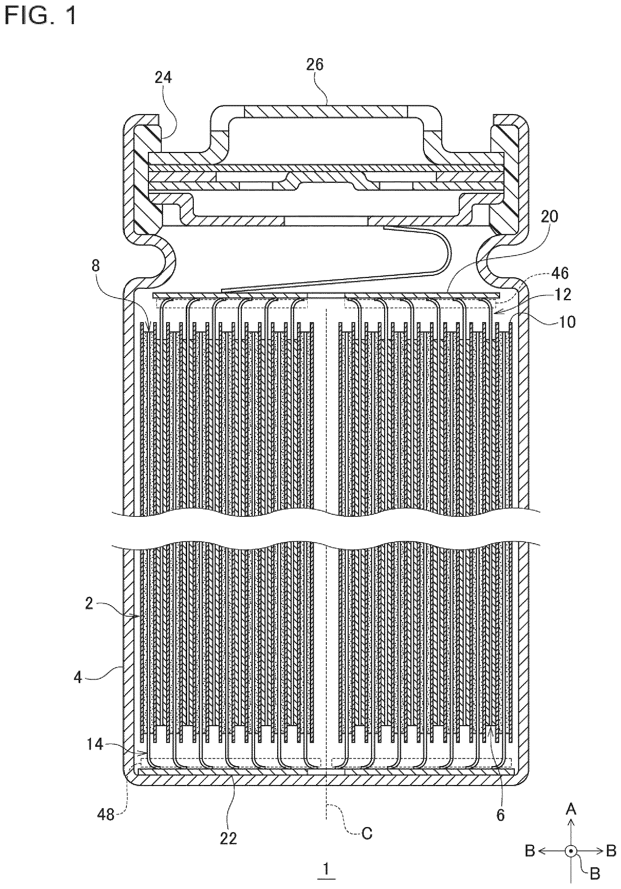

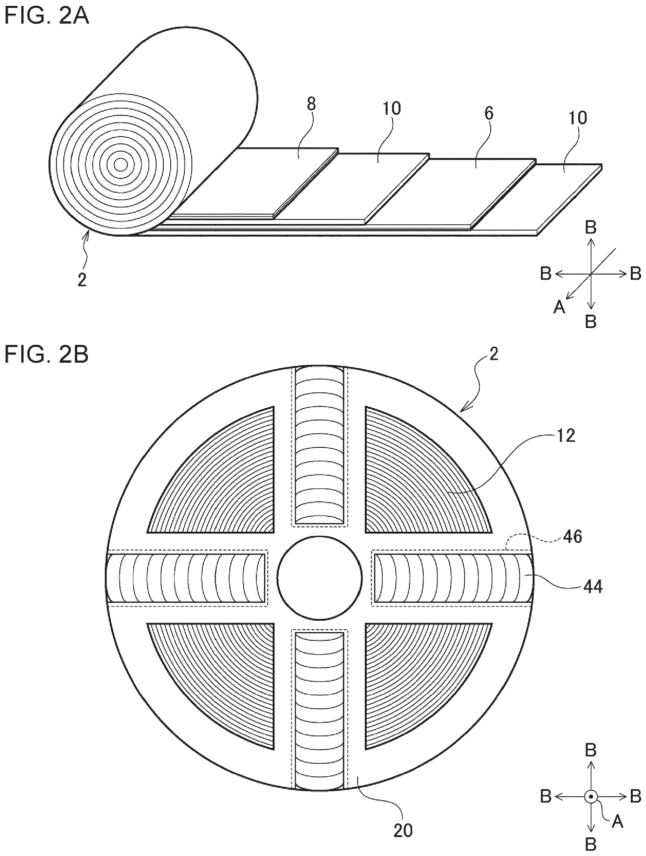

FIG. 1 is a cross-sectional view of a battery 1. FIG. 2A is an exploded perspective view of an electrode group 2. FIG. 2B is a plan view of the electrode group 2 to which the first current collector plate 20 is joined. In FIG. 2A, illustration of a first uncoated portion 12 and a second uncoated portion 14 is omitted. In FIG. 2B, illustration of a non-joined region 50 is omitted.

The battery 1 is, for example, a rechargeable secondary battery such as a lithium ion battery, a nickel-metal hydride battery, and a nickel-cadmium battery. The battery 1 by way of one example has a structure in which the electrode group 2 is stored in an outer can 4 along with a electrolytic solution (not shown). The electrode group 2 is cylindrical in shape by way of one example and, as shown in FIG. 2A, has a winding structure in which a belt-like first electrode plate 6 and a belt-like second electrode plate 8 are stacked, sandwiching a belt-like separator 10, and are wound in a spiral shape. In this embodiment, the first electrode plate 6 is the positive electrode plate and the second electrode plate 8 is the negative electrode plate, but the polarity of the first electrode plate 6 and the second electrode plate 8 may be reversed. The separator 10 is formed by a microporous film made of, by way of one example, a polypropylene resin or the like.

The first electrode plate 6 and the second electrode plate 8 have a structure in which an electrode active material layer is stacked on a current collector. In the case of a general lithium ion secondary battery, the current collector is comprised of an aluminum foil or the like when it is a positive electrode and is comprised of a copper foil or the like when it is a negative electrode. The electrode active material layer can be formed by applying an electrode mixture material to the surface of the current collector by a known coating apparatus and drying and rolling the material. The electrode mixture material is obtained by kneading materials including an electrode active material, a binder, a conductive material, etc. in a dispersion medium and uniformly dispersing the materials. In the case of a general lithium ion secondary battery, the electrode active material is lithium cobalt oxide, lithium iron phosphate, or the like when it is a positive electrode and is graphite or the like when it is a negative electrode.

The first electrode plate 6 has a first uncoated portion 12 that is not coated with an electrode mixture material at the end on one side in the width direction A (a direction that intersects the longitudinal direction of the belt). The first uncoated portion 12 is an exposed portion in the current collector of the first electrode plate 6 where the electrode active material layer is not stacked. Further, the second electrode plate 8 has a second uncoated portion 14 not coated with an electrode mixture material at the end on the other side in the width direction A, that is, at the end opposite to the side where the first uncoated portion 12 protrudes. The second uncoated portion 14 is an exposed portion in the current collector of the second electrode plate 8 where the electrode active material layer is not stacked.

As described above, the electrode group 2 has a structure in which the first electrode plate 6 and the second electrode plate 8 are wound. For this reason, a plurality of ends of the first electrode plate 6 and the second electrode plate 8 in the width direction A are arranged in the radial direction B of the electrode group 2. Therefore, the electrode group 2 includes a plurality of first uncoated portions 12 arranged in the radial direction B and a plurality of second uncoated portions 14 arranged in the radial direction B.

The electrode group 2 has a first joined region 46 in which the ends of a plurality of first electrode plates 6 (the first uncoated portion 12) arranged in the radial direction B are bent in the radial direction B. Each first uncoated portion 12 of this embodiment is bent toward the center of winding C of the electrode group 2, i.e., bent inward in the radial direction B. The center of winding C is, for example, the geometric center of the outline of the electrode group 2 seen in the width direction A, i.e., the geometric center of the outline of the shape of the electrode group 2 projected in the width direction A. The electrode group 2 by way of one example has a plurality of first joined regions 46 at predetermined spacings in the circumferential direction of the electrode group 2. As shown in FIG. 2B, the electrode group 2 of this embodiment has four first joined regions 46 at spacings of 90° in the circumferential direction.

Further, the electrode group 2 has a second joined region 48 in which the ends of a plurality of second electrode plates 8 (the second uncoated portion 14) arranged in the radial direction B are bent in the radial direction B. Each second uncoated portion 14 of this embodiment is bent toward the center of winding C. The electrode group 2 by way of one example has a plurality of second joined regions 48 at predetermined spacings in the circumferential direction of the electrode group 2. The electrode group 2 of this embodiment has four second joined regions 48 spaced at spacings of 90° in the circumferential direction. It should be noted that the electrode group 2 may include only one of the first joined regions 46 and the second joined regions 48. The first joined region 46 and the second joined region 48 will be described in detail later.

A first current collector plate 20 is provided on the side where the first uncoated portion 12 in the electrode group 2 protrudes. The first current collector plate 20 is made of, for example, aluminum or the like. The ends of the plurality of first electrode plates 6 bent in the first joined region 46 are in surface contact with the first current collector plate 20. By bending the end of each first electrode plate 6, the contact area between each first uncoated portion 12 and the first current collector plate 20 increases. Then, laser welding or the like is performed at a position where the first joined region 46 and the first current collector plate 20 overlap, forming a joined portion 44. Thereby, the first electrode plate 6 and the first current collector plate 20 of each winding layer are joined to each other.

A second current collector plate 22 is provided on the side where the second uncoated portion 14 in the electrode group 2 protrudes. The second current collector plate 22 is made of, for example, copper, nickel, nickel-plated copper, nickel-plated iron, and the like. The ends of a plurality of second electrode plates 8 bent in the second joined region 48 are in surface contact with the second current collector plate 22. By bending the end of each second electrode plate 8, the contact area between each second uncoated portion 14 and the second current collector plate 22 increases. Laser welding or the like is performed at a position where the second joined region 48 and the second current collector plate 22 overlap, forming a joined portion (not shown). Thereby, the second electrode plate 8 and the second current collector plate 22 of each winding layer are joined to each other.

The electrode group 2 to which the first current collector plate 20 and the second current collector plate 22 are joined is stored in the bottomed cylindrical outer can 4 along with the electrolytic solution. The outer can 4 is made of, for example, copper, nickel, iron, an alloy thereof, or the like. The second current collector plate 22 is joined to the inner bottom surface of the outer can 4 by welding or the like. The first current collector plate 20 is joined to a sealing plate 26 made of the same metal as the outer can 4 by welding or the like. The sealing plate 26 is fitted into the opening of the outer can 4 via an insulating gasket 24. Thereby, the electrode group 2 and the electrolytic solution are sealed in the outer can 4.

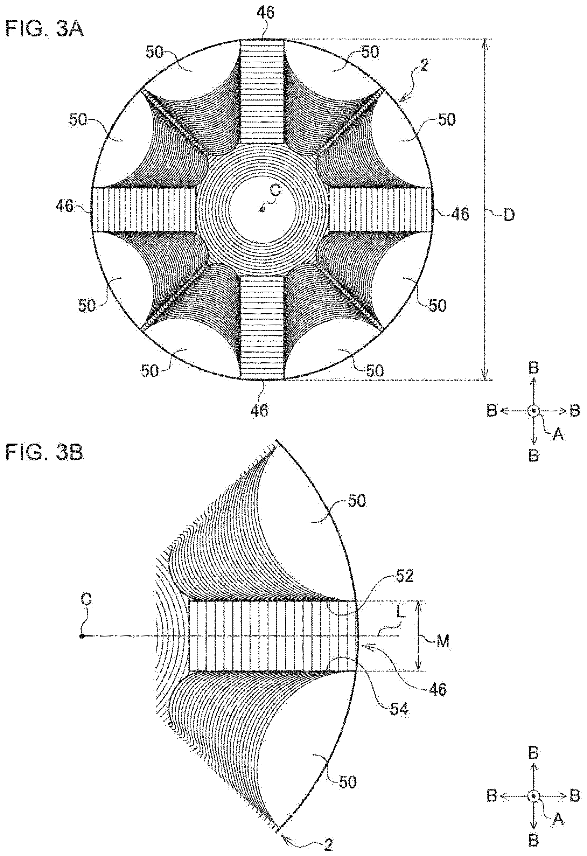

The shape of the joined region will now be described. FIG. 3A is a plan view of the electrode group 2. FIG. 3B is an enlarged view of a set comprised of the first joined region 46 and the non-joined regions 50. Hereinafter, the shape of the joined region will be described with reference to the first joined region 46 as an example. The shape of the second joined region 48 is similar to that of the first joined region 46.

As described above, the electrode group 2 of this embodiment includes four first joined regions 46. The first joined regions 46 are displaced from each other by 90° in the circumferential direction of the electrode group 2. Each first joined region 46 is a substantially rectangular region extending in the radial direction B. Further, each first joined region 46 is sandwiched between two non-joined regions 50 arranged in the circumferential direction of the electrode group 2. Each non-joined region 50 is more recessed than the first joined region 46 in the width direction A and is a region that is not substantially joined to the first electrode plate 6.

Each first joined region 46 has a first boundary portion 52 and a second boundary portion 54. The first boundary portion 52 marks a boundary between the first joined region 46 and one of the non-joined regions 50. The second boundary 54 marks a boundary between the first joined region 46 and the other non-joined region 50. The first boundary portion 52 and the second boundary portion 54 are arranged in the circumferential direction of the electrode group 2.

Each of the first boundary portion 52 and the second boundary portion 54 extends substantially parallel to a predetermined imaginary line L passing through the center of winding C and the first joined region 46 of the electrode group 2. Thus, the first boundary portion 52 and the second boundary portion 54 extend substantially parallel to each other. In this embodiment, "substantially parallel" means not only completely parallel to the counterpart (the imaginary line L, or the second boundary portion 54 with respect to the first boundary portion 52) but also covers a case where the distance from the counterpart at each position in the radial direction B is slightly displaced. For example, the term also covers a case in which the boundary portion extends by an amount of displacement of less than 0.075D, which is described later. The imaginary line L is a straight line located between the first boundary portion 52 and the second boundary portion 54. For example, the imaginary line L is a straight line passing through the geometric center of the outline of the first joined region 46 and the center of winding C as seen in the width direction A. Substantially parallel extension of the two boundary portions ensures uniformity of the range in the first electrode plate 6 in which the end thereof is bent in each winding layer. This ensures uniformity of the area joining the first electrode plate 6 and the first current collector plate 20 in each winding layer and increases the stability of joint between the electrode group 2 and the first current collector plate 20.

Given that the diameter of the electrode group 2 is denoted by D, each of the first boundary portion 52 and the second boundary portion 54 extends such that the amount of displacement in a direction orthogonal to the imaginary line L is preferably less than 0.075D. That is, the distance between the point closest to the imaginary line L and the farthest point in each boundary portion in a direction orthogonal to the imaginary line L, i.e., the parallelism of each boundary with respect to the imaginary line L is less than 0.075D. The diameter D is, for example, an average of the maximum outer diameter and the minimum outer diameter of the electrode group 2 seen in the width direction A and is, for example, 15 mm-50 mm. It is desirable that each boundary portion is completely parallel to the imaginary line L. Even when the boundary portion meanders with respect to the imaginary line L, however, difficulty in ensuring uniformity of the area joining the first electrode plate 6 and the first current collector plate 20 in each winding layer is suppressed, by controlling the amount of displacement in the direction orthogonal to the imaginary line L in each boundary portion to be less than 0.075 times the diameter D.

Given that the spacing between the first boundary portion 52 and the second boundary portion 54 at each position in the radial direction B is denoted by M and the diameter of the electrode group 2 by D, the spacing M preferably satisfies 0.1D<M<0.25D. The spacing M is a distance between the first boundary portion 52 and the second boundary portion 54 in the direction orthogonal to the imaginary line L at each position in the radial direction B. By keeping the spacing M to be more than 0.1 times the diameter D of the electrode group 2 and less than 0.25 times the diameter of D, it is easier to ensure uniformity of the area joining the first electrode plate 6 and the first current collector plate 20 in each winding layer.

Preferably, the first joined region 46 extends to the outer edge of the electrode group 2 in the radial direction B. This makes it easier to ensure uniformity of the area joining the first electrode plate 6 and the first current collector plate 20 in each winding layer. The dimension of the first joined region 46 in the radial direction B is preferably 0.1D or more.

The method of joining the electrode group 2 and the current collector plate will now be described. Hereinafter, the method of joining the electrode group 2 and the current collector plate will be described with reference to joint between the first joined region 46 and the first current collector plate 20 as an example. Joint between the second joined region 48 and the second current collector plate 22 is the same as in the case of the first joined region 46.

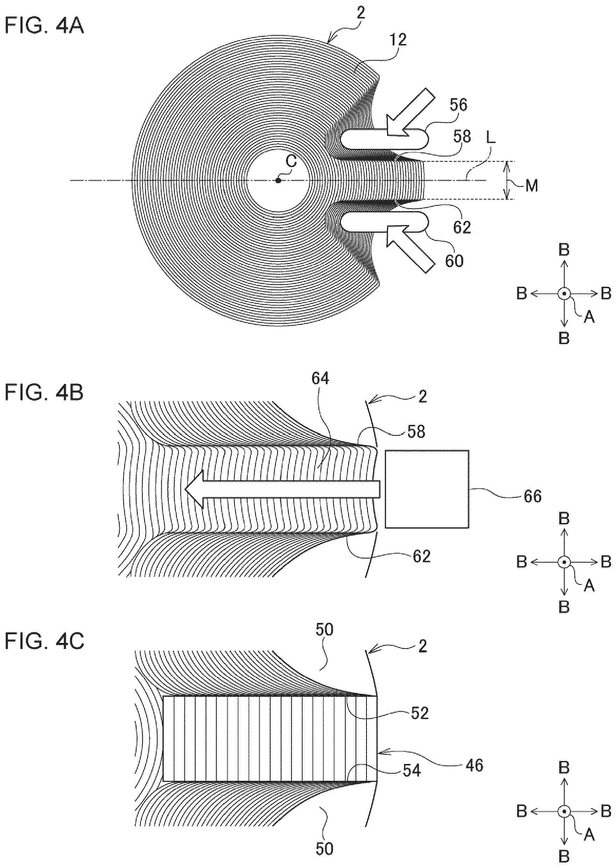

It should be noted that only one of the first joined regions 46 and the second joined regions 48 may be formed and joined to the current collector plate by the method according to this embodiment. FIGS. 4A-4C show the steps of forming the first joined region 46.

First, as shown in FIG. 2A, the first electrode plate 6, the second electrode plate 8, and the separators 10, which are belt-like, are prepared. Then, the separator 10, the first electrode plate 6, the separator 10, and the second electrode plate 8 are stacked in this order. The stacked product thus obtained is wound in a spiral shape to form the winding electrode group 2.

Next, as shown in FIG. 4A, a first processing tool 56 is pressed, in a predetermined region of the electrode group 2, against the ends of a plurality of first electrode plates 6 arranged in the radial direction B, i.e., a plurality of first uncoated portions 12 to bend the ends of the plurality of first electrode plates 6 in the radial direction B. By way of one example, the end of each first electrode plate 6 is bent inward in the radial direction B. The first processing tool 56 has a surface parallel to the imaginary line L passing through the center of winding C and presses the ends of the plurality of first electrode plates 6 with this surface. This forms a first ridge line 58 substantially parallel to the imaginary line L and displaced in the circumferential direction of the electrode group 2 with respect to the imaginary line L.

Further, a second processing tool 60 is pressed against the ends of a plurality of first electrode plates 6 arranged in the radial direction B to bend the ends of the plurality of first electrode plates 6 in the radial direction B. The second processing tool 60 has a surface parallel to the imaginary line L and presses the ends of a plurality of first electrode plates 6 with this surface. Further, the second processing tool 60 presses a region arranged side by side with the region pressed by the first processing tool 56 in the circumferential direction of the electrode group 2, with the imaginary line L in between. This forms a second ridge line 62 that is substantially parallel to the imaginary line L and displaced in the circumferential direction with respect to the first ridge line 58, i.e., arranged side by side with the first ridge 58 in the circumferential direction, with the imaginary line L in between. The formation of the second ridge 62 may be concurrent with the formation of the first ridge 58 or after the formation of the first ridge 58.

When forming the first ridge 58 and the second ridge 62, the first processing tool 56 and the second processing tool 60 pressed against the ends of the first electrode plates 6 are preferably displaced in the radial direction B and the direction approaching the imaginary line L. By way of one example, the first processing tool 56 and the second processing tool 60 of this embodiment move inward in the radial direction B toward the center of winding C, while also moving in the direction approaching the imaginary line L. Thus, by moving the first processing tool 56 and the second processing tool 60 at an angle to a region where the first joined region 46 is scheduled to be formed, while pressing the first processing tool 56 and the second processing tool 60 against the electrode group 2, it is easier to form the first ridge line 58 and the second ridge line 62 parallel to the imaginary line L.

Further, it is more preferable to displace the first processing tool 56 and the second processing tool 60 in a curved trajectory such that the amount of displacement in the radial direction B gradually decreases and the amount of displacement in the direction approaching the imaginary line L gradually increases. For example, the first processing tool 56 and the second processing tool 60 in the initial stage of displacement are displaced more significantly in the direction approaching the center of winding C than in the direction approaching the imaginary line L. Then, in the process of displacement, the amount of displacement in the direction approaching the imaginary line L gradually increases, and the amount of displacement approaching the center of winding C gradually decreases. As a result, the first processing tool 56 and the second processing tool 60 in the later stage of displacement are displaced more significantly in the direction approaching the imaginary line L than in the direction approaching the center of winding C.

That is, displacement of the first processing tool 56 and the second processing tool 60 makes a transition from a mode in which the amount of displacement in the radial direction B is greater than the amount of displacement in the direction approaching the imaginary line L to a mode in which the amount of displacement in the direction approaching the imaginary line L is greater than the amount of displacement in the radial direction B. By displacing each processing tool in a curved trajectory, the process to bend the end of the first electrode plate 6 in the radial direction B is given priority in the initial stage of displacement of each processing tool. In the later stage of displacement, the end of each first electrode plate 6 bent in the radial direction B is processed to be pressed toward the imaginary line L to form the ridge lines. This makes it easy to form the first ridge line 58 and a second ridge 62 parallel to the imaginary line L.

Next, as shown in FIG. 4B, a third processing tool 66 is pressed against a section 64 sandwiched between the first ridge line 58 and the second ridge line 62. The third processing tool 66 by way of one example has a surface facing the electrode group 2 in the width direction A by a width substantially equal to the spacing M between the first ridge line 58 and the second ridge line 62. The third processing tool 66 moves in the radial direction B while pressing this surface against the section 64. For example, the third processing tool 66 moves inward in the radial direction B toward the center of winding C. The ends of the plurality of first electrode plates 6 in the section 64 are, when pressed by the third processing tool 66, bent inward in the radial direction B, at the first ridge line 58 and the second ridge line 62.

This forms, as shown in FIG. 4C, a substantially rectangular first joined region 46 extending in the radial direction B. The portion pressed and dented by the first processing tool 56 and the portion pressed and dented by the second processing tool 60 become the non-joined regions 50. Further, the first ridge line 58 becomes the first boundary portion 52, and the second ridge line 62 becomes the second boundary portion 54.

In the winding electrode group 2, the first electrode plate 6 located outward in the radial direction B is curved with a smaller curvature than the first electrode plate 6 located inward in the radial direction B. Therefore, the outer first electrode plate 6 is more likely to be bent in the radial direction B than the inner first electrode plate 6. When the section 64 is pressed by the third processing tool 66 without providing the first ridge line 58 and the second ridge line 62, therefore, the outer first electrode plate 6 tends to be bent at a position deeper than that of the inner first electrode plate 6, i.e., at a position farther from the end in the width direction A. The deeper the bent position, the larger the portion folded in the radial direction B. This results in the size of the portion where the first electrode plate 6 and the first current collector plate 20 are in contact varying from one winding layer to another.

When the first ridge line 58 and the second ridge line 62 extending substantially parallel to each other are provided, on the other hand, the first electrode plate 6 of each winding layer is bent at a pair of ridge lines. This ensures uniformity of the width of the bent portion of each first electrode plate 6 (the dimension in the direction orthogonal to the imaginary line L). Uniform width of the bent portion also ensures uniformity of the depth of the bent portion of each first electrode plate 6. Thereby, the end of the first electrode plate 6 located outward can be bent in the same way as the end of the first electrode plate 6 located inward. This ensures uniformity of the area joining the first electrode plate 6 and the first current collector plate 20 in each winding layer.

The first ridge line 58 and the second ridge line 62 are preferably formed to be in contact with the outer edge of the electrode group 2 in the radial direction B. That is, the first ridge line 58 and the second ridge line 62 extend to the outer edge of the electrode group 2. Thereby, the first electrode plate 6 of the outermost layer, which tends to bent at the deepest position, is bent in the same way as the other first electrode plates 6. This ensures uniformity of the area joining the first electrode plate 6 and the first current collector plate 20 in each winding layer.

The first ridge line 58 and the second ridge line 62 are preferably formed to extend such that the amount of displacement in the direction orthogonal to the imaginary line L is less than 0.075D. This makes it easier to bend the first electrode plate 6 of each winding layer more uniformly. This ensures uniformity of the area joining the first electrode plate 6 and the first current collector plate 20 in each winding layer.

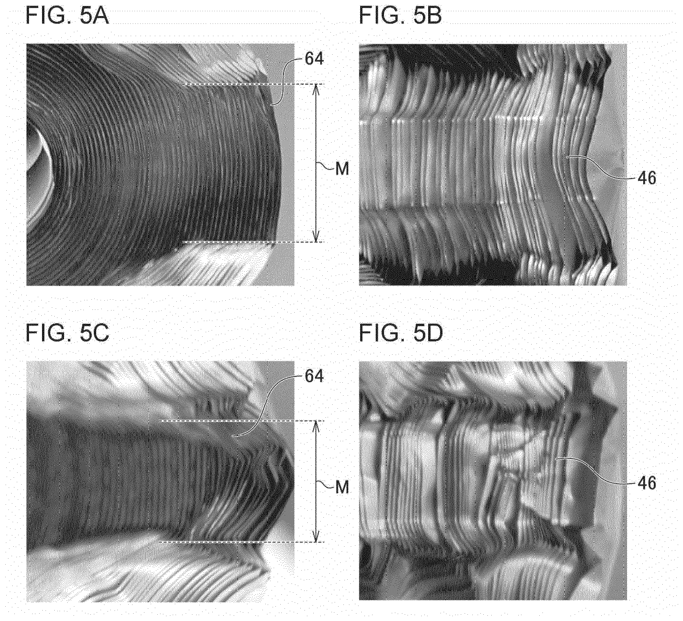

The first ridge line 58 and the second ridge line 62 are preferably formed such that the spacing M between the first ridge line 58 and the second ridge line 62 at each position in the radial direction B satisfies 0.1D<M<0.25D. FIG. 5A shows the section 64 photographed when the spacing M is 0.25D. FIG. 5B shows the first joined region 46 photographed when the spacing M is 0.25D. FIG. 5C shows the section 64 photographed when the spacing M is 0.1D. FIG. 5D shows the first joined region 46 photographed when the spacing M is 0.1D.

We have found, through repeated examinations, that, as shown in FIGS. 5A and 5B, the first electrode plate 6 outward in the radial direction B is more likely to be bent at a position deeper than that of the first electrode plate 6 inward when the interval M is 0.25 times or more than the diameter D of the electrode group 2. We have also found that, as shown in FIGS. 5C and 5D, that, when the interval M is 0.1 times or less than the diameter D, the amount of flexure of each first electrode plate 6 in the circumferential direction of the electrode group 2 becomes excessive, causing it more likely that wrinkles are formed when each first electrode plate 6 is bent by the third processing tool 66. When wrinkles are formed in the first joined region 46, it becomes difficult to ensure uniformity of the area joining the first electrode plate 6 and the first current collector plate 20 in each winding layer.

Therefore, it is ensured that the depth of the bent position of each first electrode plate 6 is more uniform and that formation of wrinkles is suppressed in the first joined region 46, by forming each ridge line such that the spacing M satisfies 0.1D<M<0.25D. This makes it easy to ensure uniformity of the area joining the first electrode plate 6 and the first current collector plate 20 in each winding layer.

The above-described process is also applied to other regions of the electrode group 2 to form a further first joined region 46. Some or all of first joined regions 46 may be formed concurrently. After all of the first joined regions 46 are formed, the ends of a plurality of first electrode plates 6 bent in the first joined region 46 and the first current collector plate 20 are joined as shown in FIG. 2B.

The same process is applied to the ends of the plurality of second electrode plates 8 to form the second joined region 48. Then, the second current collector plate 22 is joined to the ends of the plurality of second electrode plates 8 bent in the second joined region 48. The electrode group 2 to which the first current collector plate 20 and the second current collector plate 22 are joined is housed in the outer can 4 along with the electrolytic solution. Then, processes like joint of the second current collector plate 22 with the outer can 4, joint of the first current collector plate 20 with the sealing plate 26, fitting of the sealing plate 26 to the opening of the outer can 4, etc. are performed. Thereby, the battery 1 is obtained.

As described above, the electrode group 2 included in the battery 1 according to this embodiment has a joined area (at least one of the first joined region 46 and the second joined region 48) where the ends of the plurality of electrode plates (at least one of the first electrode plates 6 and the second electrode plates 8) arranged in the radial direction B are bent in the radial direction B, and where the ends of the plurality of electrode plates thus bent are joined to the current collector plate (at least one of the first current collector plate 20 and the second current collector plate 22). The joined region is sandwiched between two non-joined regions 50 arranged in the circumferential direction of the electrode group 2. The first boundary 52 and the second boundary 54, which are the boundaries between the joined region and the respective non-joined region 50, extend substantially parallel to the imaginary line L passing through the center of winding C and the joined region.

Substantially parallel extension of the two boundaries produces a state in which the electrode plate of each winding layer is bent more uniformly. This ensures uniformity of the area joining the electrode plate and the current collector plate in each winding layer and increases the stability of joint between the electrode group 2 and the current collector plate. Accordingly, the quality of the battery 1 is improved.

Further, the first boundary portion 52 and the second boundary portion 54 of this embodiment extend such that the amount of displacement in the direction orthogonal to the imaginary line L is less than 0.075D. Further, the spacing M between the first boundary portion 52 and the second boundary portion 54 at each position in the radial direction B satisfies 0.1D<M<0.25D. Further, the joined region extends to the outer edge of the electrode group 2 in the radial B. This makes it easier to ensure uniformity of the area joining the electrode plate and the current collector plate in each winding layer.

Further, the method of joining the electrode group 2 and the current collector plate (at least one of the first current collector plate 20 and the second current collector plate 22) according to this embodiment includes: pressing the first processing tool 56 against the ends of a plurality of first electrode plates arranged in the radial direction B (at least one of the first electrode plates 6 and the second electrode plates 8) to form the first ridge line 58 substantially parallel to the imaginary line L and displaced in the circumferential direction of the electrode group 2 with respect to the imaginary line L; pressing, concurrently or after the formation of the first ridge line 58, the second processing tool 60 against the ends of a plurality of electrode plates arranged in the radial direction B to form the second ridge line 62 substantially parallel to the imaginary line L and displaced in the circumferential direction with respect to the first ridge line 58; pressing the third processing tool 66 against the section 64 sandwiched between the first ridge line 58 and the second ridge line 62 to form a joined region (at least one of the first joined region 46 and the second joined region 48) by bending the ends of the plurality of electrode plates in the section 64 in the radial direction B; and joining the ends of the plurality of electrode plates bent in the joined region with the current collector plate.

By providing the first ridge line 58 and the second ridge line 62 substantially parallel to each other, and bending the electrode plates in each winding layer at the pair of ridge lines, the electrode plates are bent more uniformly. This ensures uniformity of the area joining the electrode plate and the current collector plate in each winding layer and increases the stability of joint between the electrode group 2 and the current collector plate. Accordingly, the quality of the battery 1 is improved.

Further, the joining method of this embodiment includes displacing the first processing tool 56 and the second processing tool 60 in the radial direction B and the direction approaching the imaginary line L. Further, the joining method of this embodiment includes displacing the first processing tool 56 and the second processing tool 60 in a curved trajectory such that the amount of displacement in the radial direction B gradually decreases and the amount of displacement in the direction approaching the imaginary line L gradually increases. These make it easier to form the first ridge line 58 and the second ridge line 62 parallel to the imaginary line L. Accordingly, it is easier to ensure uniformity of the area joining the electrode plate and the current collector plate in each winding layer.

Further, the joining method of this embodiment includes forming the first ridge line 58 and the second ridge line 62 to extend such that the amount of displacement in the direction orthogonal to the imaginary line L is less than 0.075D. Further, the method includes forming the first ridge line 58 and the second ridge line 62 such that the spacing M between the first ridge line 58 and the second ridge line 62 at each position in the radial direction B satisfies 0.1D<M<0.25D. Further, the method includes forming the first ridge line 58 and the second ridge line 62 to be in contact with the outer edge of the electrode group 2 in the radial direction B. This makes it easier to ensure uniformity of the area joining the electrode plate and the current collector plate in each winding layer.

The embodiments of the present disclosure are described above in detail. The embodiments described above are merely specific examples of practicing the present disclosure. The details of the embodiment shall not be construed as limiting the technical scope of the present disclosure. A number of design modifications such as modification, addition, deletion, etc. of constituting elements may be made to the extent that they do not depart from the idea of the invention defined by the claims. New embodiments with design modifications will provide the combined advantages of the embodiment and the variation. Although the details subject to such design modification are emphasized in the embodiment described above by using phrases such as "of this embodiment" and "in this embodiment", details not referred to as such are also subject to design modification. Any combination of constituting elements included in the respective embodiments is also useful as an embodiment of the present disclosure. Hatching in the cross section in the drawings should not be construed as limiting the material of the hatched object.

The embodiments may be defined by the following items.

### [ITEM 1]

A battery (1) including:
a winding electrode group (2) formed by stacking and winding a separator (10) and an electrode plate (6, 8); and
a current collector plate (20, 22),
wherein the electrode group (2) has a joined region (46, 48) in which ends of a plurality of electrode plates (6, 8) arranged in a radial direction (B) are bent in the radial direction (B) and a plurality of bent ends are joined to the current collector plate (20, 22),
wherein the joined region (46, 48) is sandwiched by two non-joined regions (50) arranged in a circumferential direction of the electrode group (2), and a first boundary portion (52), which is a boundary between the joined region (46, 48) and one of the non-joined regions (50), and a second boundary portion (54), which is a boundary between the joined region (46, 48) and the other non-joined region (50), extend substantially parallel to a predetermined imaginary line (L) passing through a center of winding (C) of the electrode group (2) and the joined region (46, 48).

### [ITEM 2]

The battery (1) according to ITEM 1, wherein, given that a diameter of the electrode group (2) is denoted by D, each of the first boundary portion (52) and the second boundary portion (54) extends such that an amount of displacement in a direction orthogonal to the imaginary line (L) is less than 0.075D.

### [ITEM 3]

The battery (1) according to ITEM 1 or ITEM 2, wherein, given that a spacing between the first boundary portion (52) and the second boundary portion (54) at each position in the radial direction (B) is denoted by M and a diameter of the electrode group (2) is denoted by D, the spacing M satisfies 0.1D<M<0.25D.

### [ITEM 4]

The battery (1) according to any one of ITEM 1 through ITEM 3, wherein the joined region (46, 48) extends to an outer edge of the electrode group (2) in the radial direction (B) .

### [ITEM 5]

A method of joining a winding electrode group (2) formed by stacking and winding a separator (10) and an electrode plate (6, 8) with a current collector plate (20, 22), including: pressing a first processing tool (56) against ends of a plurality of electrode plates (6, 8) arranged in a radial direction (B) of the electrode group (2) to form a first ridge line (58) substantially parallel to an imaginary line (L) passing through a center of winding (C) of the electrode group (2) and displaced in a circumferential direction of the electrode group (2) with respect to the imaginary line (L);
pressing, concurrently or after formation of the first ridge line (58), a second processing tool (60) against the ends of the plurality of electrode plates (6, 8) arranged in the radial direction (B) to form a second ridge line (62) substantially parallel to the imaginary line (L) and displaced in the circumferential direction with respect to the first ridge line (58);
pressing a third processing tool (66) against a section (64) sandwiched between the first ridge line (58) and the second ridge line (62) to form a joined region (46, 48) by bending the ends of the plurality of electrode plates (6, 8) in the section (64) in the radial direction (B); and
joining the ends of the plurality of electrode plates (20, 22) bent in the joined region (46, 48) with the current collector plate (20, 22).

### [ITEM 6]

The method of joining according to ITEM 5, including: displacing the first processing tool (56) and the second processing tool (60) in the radial direction (B) and a direction approaching the imaginary line (L).

### [ITEM 7]

The method of joining according to ITEM 6, including: displacing the first processing tool (56) and the second processing tool (60) in a curved trajectory such that an amount of displacement in the radial direction (B) gradually decreases and an amount of displacement in the direction approaching the imaginary line (L) gradually increases.

### [ITEM 8]

The method of joining according to any one of ITEM 5 through ITEM 7, including: forming, given that a diameter of the electrode group (2) is denoted by D, the first ridge line (58) and the second ridge line (62) to extend such that an amount of displacement in a direction orthogonal to the imaginary line (L) is less than 0.075D.

### [ITEM 9]

The method of joining according to any one of ITEM 5 through ITEM 8, including: forming, given that a spacing between the first ridge line (58) and the second ridge line (62) at each position in the radial direction (B) is denoted by M and a diameter of the electrode group (2) is denoted by D, the first ridge line (58) and the second ridge line (62) such that the spacing M satisfies 0.1D<M<0.25D.

### [ITEM 10]

The method of joining according to any one of claim 5 through 9, including: forming the first ridge line (58) and the second ridge line (62) to be in contact with an outer edge of the electrode group (2) in the radial direction (B).

### INDUSTRIAL APPLICABILITY

The present disclosure can be applied to batteries including an electrode group and a current collector plate and to a method of joining an electrode group and a current collector plate

### REFERENCE SIGNS LIST

1 battery, 2 electrode group, 6 first electrode plate, 8 second electrode plate, 10 separator, 20 first current collector plate, 22 second current collector plate, 46 first joined region, 48 second joined region, 50 non-joined region, 52 first boundary portion, 54 second boundary portion, 56 first processing tool, 60 second processing tool, 64 section, 66 third processing tool

## Claims

1. A battery comprising:
a winding electrode group formed by stacking and winding a separator and an electrode plate; and
a current collector plate,
wherein the electrode group has a joined region in which ends of a plurality of electrode plates arranged in a radial direction are bent in the radial direction and a plurality of bent ends are joined to the current collector plate,
wherein the joined region is sandwiched by two non-joined regions arranged in a circumferential direction of the electrode group, and a first boundary portion, which is a boundary between the joined region and one of the non-joined regions, and a second boundary portion, which is a boundary between the joined region and the other non-joined region, extend substantially parallel to a predetermined imaginary line passing through a center of winding of the electrode group and the joined region.

2. The battery according to claim 1,
wherein, given that a diameter of the electrode group is denoted by D, each of the first boundary portion and the second boundary portion extends such that an amount of displacement in a direction orthogonal to the imaginary line is less than 0.075D.

3. The battery according to claim 1 or 2,
wherein, given that a spacing between the first boundary portion and the second boundary portion at each position in the radial direction is denoted by M and a diameter of the electrode group is denoted by D, the spacing M satisfies 0.1D<M<0.25D.

4. The battery according to any one of claims 1 through 3,
wherein the joined region extends to an outer edge of the electrode group in the radial direction.

5. A method of joining a winding electrode group formed by stacking and winding a separator and an electrode plate with a current collector plate, comprising:
pressing a first processing tool against ends of a plurality of electrode plates arranged in a radial direction of the electrode group to form a first ridge line substantially parallel to an imaginary line passing through a center of winding of the electrode group and displaced in a circumferential direction of the electrode group with respect to the imaginary line;
pressing, concurrently or after formation of the first ridge line, a second processing tool against the ends of the plurality of electrode plates arranged in the radial direction to form a second ridge line substantially parallel to the imaginary line and displaced in the circumferential direction with respect to the first ridge line;
pressing a third processing tool against a section sandwiched between the first ridge line and the second ridge line to form a joined region by bending the ends of the plurality of electrode plates in the section in the radial direction; and
joining the ends of the plurality of electrode plates bent in the joined region with the current collector plate.

6. The method of joining according to claim 5, comprising:
displacing the first processing tool and the second processing tool in the radial direction and a direction approaching the imaginary line.

7. The method of joining according to claim 6, comprising:
displacing the first processing tool and the second processing tool in a curved trajectory such that an amount of displacement in the radial direction gradually decreases and an amount of displacement in the direction approaching the imaginary line gradually increases.

8. The method of joining according to any one of claims 5 through 7, comprising:
forming, given that a diameter of the electrode group is denoted by D, the first ridge line and the second ridge line to extend such that an amount of displacement in a direction orthogonal to the imaginary line is less than 0.075D.

9. The method of joining according to any one of claims 5 through 8, comprising:
forming, given that a spacing between the first ridge line and the second ridge line at each position in the radial direction is denoted by M and a diameter of the electrode group is denoted by D, the first ridge line and the second ridge line such that the spacing M satisfies 0.1D<M<0.25D.

10. The method of joining according to any one of claims 5 through 9, comprising:
forming the first ridge line and the second ridge line to be in contact with an outer edge of the electrode group in the radial direction.
